# EUROPEAN PATENT APPLICATION

(11) **EP 4 456 416 A1**
(43) Date of publication of application: **30.10.2024**
(21) Application number: 22910870.9
(22) Date of filing: 06.12.2022
(51) Int. Cl.: H02S 40/34, E06B 5/00, E06B 7/28, H02S 40/32, H02S 40/38

(54) **POWER GENERATION GLASS MODULE AND POWER GENERATION UNIT**

(30) Priority: 23.12.2021 JP 2021209605
(71) Applicant: Nippon Sheet Glass Company, Limited, Tokyo 108-6321 (JP)
(72) Inventor: NAKAMURA, Tetsuya, Tokyo 108-6321 (JP); SHIMIZU, Yutaka, Tokyo 108-6321 (JP); FUJISAWA, Akira, Tokyo 108-6321 (JP)
(74) Representative: Hope, Adam John
(86) International application number: PCT/JP2022/044870
(87) International publication number: WO 2023/120156

(57) **Abstract**

A power generation glass module (2) movable and electrically connectable to a power transmission unit (4) configured to wirelessly transmit electricity to a power reception unit (5) disposed at a predetermined position outside the power generation glass module (2) includes: an openable and closable glass plate (10) having a principal surface; a solar cell module (20) provided on the principal surface of the glass plate (10) and including a solar cell configured to convert light into electricity; and a power transmission terminal (30) configured to supply the electricity from the solar cell module (20) to the power transmission unit (4) and move together with the power transmission unit (4) in response to opening and closing of the glass plate (10). The power transmission terminal (30) is drawn from an area of the solar cell module (20) which area is close to the power transmission unit (4), such that the power reception unit (5) faces the power transmission unit (4) when the glass plate (10) is fully closed, and in at least part of a range where the glass plate (10) is openable.

## Description

### Technical Field

The present invention relates to a power generation glass module including a solar cell disposed on a glass plate, and a power generation unit.

### Background Art

For a building, the configuration of a glass window including a glass plate on which a solar cell is disposed is proposed (for example, see Patent Literature 1). A glass window (a power generation window in Patent Literature 1) described in Patent Literature 1 includes a glass plate, a solar cell disposed on an indoor side of the glass plate, power transmission means configured to transmit electric power generated by the solar cell, and power receiving means provided in a window frame and configured to receive the electric power from the power transmission means.

### Citation List

### Patent Literature

Patent Literature 1: Japanese Unexamined Patent Application Publication No. 2015-151795

### Summary of Invention

### Technical Problem

The glass window described in Patent Literature 1 is fixed to a window frame of a building. In this case, the opposed position of the power transmission means in the glass window relative to the power receiving means does not change, so that electric power can be surely transmitted from the power transmission means to the power receiving means. Here, the window glass may be configured to be openable and closable. In the case of the openable and closable window glass, when the glass plate is switched from a closed state to an open state, the power receiving means and the power transmission means are displaced from each other. This causes such a situation that the power transmission means cannot transmit electric power to the power receiving means when the glass plate is opened in the window glass.

In view of this, a power generation glass module and a power generation unit each of which can surely transmit electric power from a solar cell are desired.

### Solution to Problem

A power generation glass module according to the present invention is a power generation glass module movable and electrically connectable to a power transmission unit configured to wirelessly transmit electricity to a power reception unit disposed at a predetermined position outside the power generation glass module, and the power generation glass module includes: an openable and closable glass plate having a principal surface; a solar cell module provided on the principal surface of the glass plate and including a solar cell configured to convert light into electricity; and at least one power transmission terminal configured to supply the electricity from the solar cell module to the power transmission unit and move together with the power transmission unit in response to opening and closing of the glass plate. The at least one power transmission terminal is drawn from an area of the solar cell module which area is close to the power transmission unit, such that the power reception unit faces the power transmission unit when the glass plate is fully closed, and in at least part of a range where the glass plate is openable.

A power generation glass module according to the present invention is a power generation glass module movable and electrically connectable to a power transmission unit configured to wirelessly transmit electricity to a power reception unit disposed at a predetermined position outside the power generation glass module, and the power generation glass module includes: an openable and closable glass plate having a principal surface; a solar cell module provided on the principal surface of the glass plate and including a solar cell configured to convert light into electricity; and at least one power transmission terminal configured to supply the electricity from the solar cell module to the power transmission unit and move together with the power transmission unit in response to opening and closing of the glass plate. The at least one power transmission terminal is drawn from an area of the solar cell module which area is close to the power transmission unit, such that the electricity is wirelessly transmittable from the power transmission unit to the power reception unit when the glass plate is fully closed, and in at least part of a range where the glass plate is openable.

With the above configuration, in addition to the time when the glass plate is fully closed, in at least part of the range where the glass plate is openable, the power generation glass module can transmit electricity from the power transmission unit to the power reception unit provided outside. Hereby, the power generation glass module can improve its operationability while the power generation glass module secures the use of electricity generated by the solar cell when the glass plate is opened.

Another feature configuration is such that the at least one power transmission terminal is disposed on one end portion of the glass plate in a direction perpendicular to a movable direction of the glass plate.

Generally, both end surfaces of the openable and closable glass plate in the direction perpendicular to the movable direction are configured to move along respective surfaces facing the end surfaces. In view of this, in this configuration, the power transmission terminal is disposed on at least one end side of the solar cell module in the direction perpendicular to the movable direction of the glass plate. Hereby, the power transmission terminal is disposed easily such that, even when the glass plate moves, the power transmission unit and the power reception unit face each other.

Another feature configuration is such that: the movable direction of the glass plate is a right-left direction; the at least one power transmission terminal is disposed on an upper end portion of the glass plate; and the solar cell module is disposed below the power transmission terminal.

For example, in a general residence, a window in which the power generation glass module is placeable may be provided under the eaves. Generally, the eaves block sunlight to be received by the upper portion of the window under the eaves. Accordingly, in a case where the power generation glass module is provided in the window under the eaves, sunlight may not be incident on the solar cell disposed in the upper portion of the glass plate. In view of this, in this configuration, the power transmission terminal is disposed on the upper end side of the glass plate, and the solar cell module is disposed below the power transmission terminal. Hereby, the solar cell module can be separated from the upper end side of the glass plate and disposed over the lower end side thereof. As a result, the power generation glass module can effectively restrain a decrease in the power generation efficiency of the solar cell.

Another feature configuration is such that the at least one power transmission terminal includes power transmission terminals disposed on both end portions of the glass plate in a movable direction of the glass plate.

In this configuration, the power transmission terminal is disposed on either end side of the glass plate in its movable direction. Accordingly, the power transmission unit can be disposed easily on either end surface of the glass plate. Hereby, when the power reception unit is disposed to face the power transmission unit disposed on either end side of the glass plate in the movable direction, the power transmission terminal can transmit electricity to the power reception unit via the power transmission unit when the glass plate is fully opened and fully closed. As a result, the power generation glass module can use the electricity generated by the solar cell when the glass plate is fully closed and fully opened.

Another feature configuration is such that the power generation glass module further includes a power storage unit configured to store the electricity generated by the solar cell.

In this configuration, the power generation glass module includes a power storage unit configured to store the electricity generated by the solar cell. This makes it possible to use generated surplus electric power without wasting. Besides, even when power generation efficiency is low, electricity stored in the power storage unit can be used, so that power generation and power storage can be completed in the power generation glass module, thereby achieving high utility.

Another feature configuration is such that the solar cell is constituted by a plurality of power generation sheets.

In this configuration, the solar cell is constituted by a plurality of power generation sheets. Accordingly, the solar cell corresponding to the size or shape of the glass plate can be easily formed by combining the plurality of power generation sheets.

Another feature configuration is such that: the solar cell module includes a connecting section configured to electrically connect the plurality of power generation sheets to each other; and the solar cell module is configured to transmit the electricity from the connecting section to the at least one power transmission terminal.

In this configuration, the plurality of power generation sheets does not individually transmit electricity, but electricity is transmitted to the power transmission terminal from the connecting section electrically connected to the plurality of power generation sheets. Hereby, the connecting section allows electricity to be efficiently transmitted from the plurality of power generation sheets to the power transmission unit via the power transmission terminal. This consequently allows the power generation glass module to increase power transmission efficiency from the solar cell module with a simple configuration.

Another feature configuration is such that the glass plate is constituted by double glass including a first glass plate, a second glass plate disposed to face the first glass plate, and a spacer disposed between the first glass plate and the second glass plate with a gap layer between the first glass plate and the second glass plate.

In this configuration, the glass plate is constituted by double glass. This makes it possible to improve heat insulation performance in the power generation glass module.

Another feature configuration is such that: the first glass plate is disposed on an outdoor side; the first glass plate has a first surface facing a side opposite from the gap layer and a second surface facing the gap layer; the second glass plate has a third surface facing the gap layer, and a fourth surface facing a side opposite from the gap layer; and the principal surface on which the solar cell module is the second surface or the third surface.

Like this configuration, when the principal surface on which the solar cell module is provided is the second surface of the first glass plate or the third surface of the second glass plate, the solar cell module is not exposed to the outdoor side and is protected by the first glass plate. This makes it possible to improve durability of the solar cell module. Note that, when the second surface of the first glass plate is compared with the third surface of the second glass plate, the second surface of the first glass plate is disposed close to the outdoor side than the third surface of the second glass plate. Accordingly, in consideration of the power generation efficiency of the solar cell, the second surface of the first glass plate is preferable as the principal surface on which the solar cell module is provided.

Another feature configuration is such that: the power transmission unit is electrically connected to the at least one power transmission terminal; the principal surface is the second surface; and the power transmission unit is disposed closer to an indoor side than the solar cell module in a thickness direction of the glass plate.

In this configuration, the power transmission unit is electrically connected to the power transmission terminal, and the principal surface on which the solar cell module is provided is the second surface of the first glass plate. In this case, in order to shorten wiring, it is preferable that the power transmission unit be placed near an end of the second surface of the first glass plate. However, since the second surface of the first glass plate is at a position close to the outdoor side, the second surface may receive wind and rain through a gap between the first glass plate and a window frame disposed around the first glass window, and this may damage the power transmission unit under the influence of the wind and rain. In view of this, in the above configuration, the power transmission unit is disposed closer to the indoor side than the solar cell in the thickness direction of the glass plate. Hereby, the power transmission unit can be disposed at a position that can avoid the influence of wind and rain from outside, thereby making it possible to improve durability of the power generation glass module.

A feature configuration of a power generation unit according to the present invention is that: the power generation unit includes the power generation glass module configured as described above, a frame body in support of the glass plate, the power transmission unit fixed to the frame body, and the power reception unit; and the power reception unit has a width in a movable direction of the glass plate which width is larger than a width of the power transmission unit in the movable direction.

With this configuration, the power reception unit configured to receive electric power wirelessly transmitted from the power transmission unit has a width in the movable direction of the glass plate which width is larger than the width of the power transmission unit in the movable direction. Hereby, even when the glass plate moves to a direction to be open from a state where the power reception unit and the power transmission unit face each other while the glass plate is fully closed, it is possible to keep the power transmission unit facing the power reception unit. As a result, in addition to the time when the glass plate is fully closed, even when the glass plate is opened, it is possible to surely transmit electricity from the power transmission unit to the power reception unit disposed outside.

Another feature configuration of the power generation unit is such that: the power transmission unit is disposed at a central position of the glass plate in the movable direction; and the power reception unit has a width allowing the power reception unit to face the power transmission unit from a state where the glass plate is fully closed to a state where the glass plate is fully opened.

In this configuration, the power reception unit has a width allowing the power reception unit to face the power transmission unit from a state where the glass plate is fully closed to a state where the glass plate is fully opened. Accordingly, the power generation unit can always transmit electricity generated by the solar cell from the power transmission unit to the power reception unit regardless of the position of the glass plate. This makes it possible to increase efficiency in the use of electricity generated by the solar cell in the power generation unit. Since the power transmission unit is disposed at the central position of the glass plate in the movable direction, it is possible to decrease the width, in the movable direction of the glass plate, of the power reception unit to be disposed to face the power transmission unit. This makes it possible to reduce an arrangement region for the power reception unit, thereby making it possible to configure the power generation unit compactly.

Another feature configuration of the power generation unit is such that the frame body is made of resin.

The power transmission unit of the power generation unit may be disposed inside the frame body in support of the glass plate. In this case, electricity is wirelessly transmitted from the power transmission unit to the power reception unit via the frame body. On this account, it is preferable that the frame body be made of a material that can hardly attenuate radio waves. In view of this, in the above configuration, the frame body in support of the glass plate is made of resin. Since the frame body is made of resin, it is possible to reduce the attenuation of radio waves at the time when the power transmission unit wirelessly transmits electricity to the power reception unit via the frame body. This consequently allows the solar cell module to increase power transmission efficiency from the solar cell module.

### Brief Description of Drawings

FIG. 1 is a sectional side view of a power generation glass module according to a first embodiment;
FIG. 2 is a plan view of the power generation glass module viewed from an indoor side;
FIG. 3 is a plan view illustrating a solar cell module and a power transmission terminal;
FIG. 4 is a sectional side view of Modification 1 of the first embodiment;
FIG. 5 is a sectional side view of an essential portion of a power generation glass module according to a second embodiment;
FIG. 6 is a sectional side view of Modification 1 of the second embodiment;
FIG. 7 is a plan view viewed from the indoor side in Modification 2 of the first and second embodiments;
FIG. 8 is a plan view viewed from the indoor side in Modification 3 of the first and second embodiments;
FIG. 9 is a plan view viewed from the indoor side in Modification 4 of the first and second embodiments;
FIG. 10 is a plan view viewed from the indoor side in Modification 5 of the first and second embodiments;
FIG. 11 is a sectional side view of an essential portion of Modification 6 of the second embodiment;
FIG. 12 is a perspective view of a window provided under the eaves.
FIG. 13 is a plan view of a power generation glass module viewed from the indoor side in an alternative embodiment;
FIG. 14 is a plan view of a power generation glass module viewed from the indoor side in an alternative embodiment;
FIG. 15 is a partial sectional side view of a power generation glass module according to an alternative embodiment; and
FIG. 16 is a partial plan view of a power generation glass module according to an alternative embodiment.

### Description of Embodiments

The following describes embodiments of a power generation glass module and a power generation unit according to the present invention with reference to the drawings. However, the present invention is not limited to the following embodiments and can be variously modified without departing from the gist of the present invention.

### [First Embodiment]

### (Power Generation Unit)

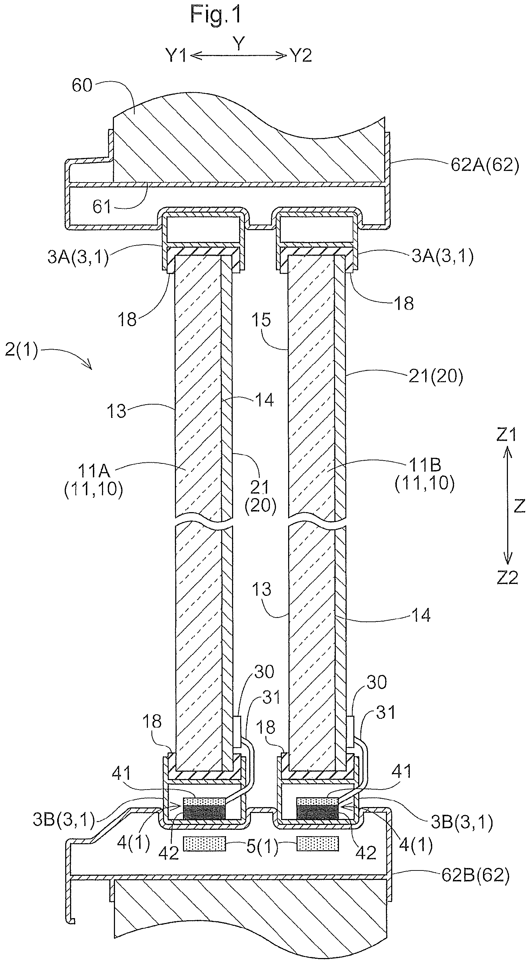

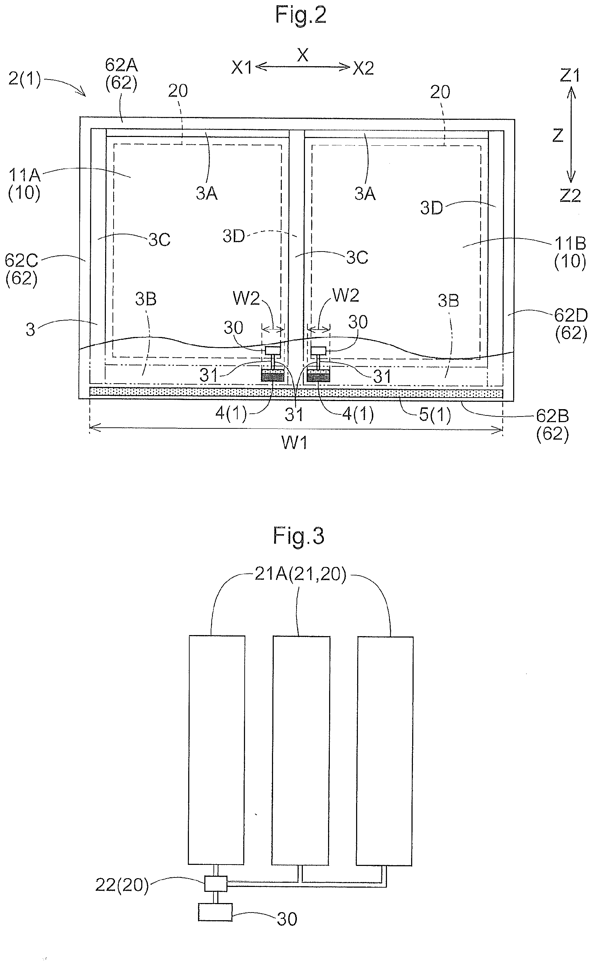

As illustrated in FIGS. 1, 2, a power generation unit 1 according to the present embodiment has a function to generate electricity by photoelectrically converting sunlight and supply the electricity. The power generation unit 1 includes a movable power generation glass module 2, a frame body 3 in support of the power generation glass module 2, a power transmission unit 4, and a power reception unit 5. The power transmission unit 4 is fixed to the frame body 3, and the power reception unit 5 is disposed at a predetermined position outside the power generation glass module 2.

The power generation glass module 2 includes a glass plate 10, a solar cell module 20, and a power transmission terminal 30. In the present embodiment, the glass plate 10 is constituted by two first glass plates 11. The solar cell module 20 includes a solar cell 21 provided on the principal surface (a second surface 14 of the first glass plate 11 in the present embodiment) of the glass plate 10 and configured to convert light into electricity. The power transmission terminal 30 is electrically connected to the power transmission unit 4 via a lead wire 31 drawn from an end of the solar cell module 20. Thus, the power generation glass module 2 is electrically connected to the power transmission unit 4 via the power transmission terminal 30. The power transmission terminal 30 supplies electricity from the solar cell module 20 to the power transmission unit 4 and moves together with the power transmission unit 4 in response to opening and closing of the glass plate 10. The power transmission unit 4 is configured to wirelessly transmit electricity to the power reception unit 5.

FIGS. 1, 2 illustrate an example of a window structure, and a window frame 62 attached to an opening edge of an opening 61 of a building 60 supports the two first glass plates 11 such that the two first glass plates 11 are slidable in the right-left direction. One glass plate 11A out of the two first glass plates 11 is disposed on an outdoor side, and the other glass plate 11B is disposed on an indoor side. The whole window frame 62 is formed in a rectangular shape and includes an upper edge portion 62A on the upper side (a Z1-side) and a lower edge portion 62B on the lower side (a Z2-side) in the up-down direction (a direction Z), and a left edge portion 62C on the left side (a Z1-side) and a right edge portion 62D on the right side (a Z2-side) in the right-left direction (a direction X), in a front view from inside the building 60.

### (Frame Body)

The frame body 3 is attached to the glass plate 11A, 11B via a sealing material 18 provided on a radially inner side of the frame body 3 as illustrated in FIG. 1, for example. The frame body 3 is provided at a position facing the window frame 62. As illustrated in FIG. 2, the frame body 3 includes an upper edge portion 3A on the upper side (the Z1-side) and a lower edge portion 3B on the lower side (the Z2-side) in the up-down direction (the direction Z), and a left edge portion 3C on the left side (the Z1-side) and a right edge portion 3D on the right side (the Z2-side) in the right-left direction (the direction X). The upper edge portion 3A, the lower edge portion 3B, the left edge portion 3C, and the right edge portion 3D of the frame body 3 face the upper edge portion 62A, the lower edge portion 62B, the left edge portion 62C, and the right edge portion 62D of the window frame 62, respectively. The window frame 62 has a rail groove (not illustrated), and the frame body 3 includes a door roller (not illustrated) configured to roll on the rail groove. The frame body 3 is made of a nonmagnetic material. Examples of the nonmagnetic material can be metal such as nonmagnetic steel, copper, and aluminum, ceramics, synthetic resin, and timber, and nonconductive nonmetal is particularly preferable. It is particularly preferable that the frame body 3 and the window frame 62 be made of resin.

In a case where the power transmission unit 4 is disposed inside the frame body 3, and the power reception unit 5 is disposed inside the window frame 62, like the present embodiment, electricity is wirelessly transmitted from the power transmission unit 4 to the power reception unit 5 via the frame body 3 and the window frame 62. On this account, it is preferable that the frame body 3 and the window frame 62 be made of a material that can hardly attenuate radio waves. In view of this, for example, when the frame body 3 and the window frame 62 are made of resin, it is possible to reduce the attenuation of radio waves at the time when the power transmission unit 4 wirelessly transmits electricity to the power reception unit 5 via the frame body 3. This consequently allows the power generation unit 1 to increase power transmission efficiency from the solar cell module 20.

Well-known glass plates can be used as the glass plate 10. For example, as the glass plate 10, various types of glass plates made of heat absorbing glass, clear glass, green glass, UV green glass, soda lime glass, and so on can be used. The thickness of the glass plate 10 is not limited in particular but is preferably 2 mm to 15 mm, and further preferably 2.5 mm to 8 mm, for example. The glass plate 10 has a first surface 13 on the outdoor side and a second surface 14 on the indoor side.

### (Solar Cell Module)

As illustrated in FIG. 1, the solar cell module 20 includes a solar cell 21 provided on the second surface 14 (the indoor side) of the glass plate 10.

The solar cell 21 generates electric power by photoelectrically converting incident light (for example, sunlight or light from a lighting device). The solar cell 21 includes a plurality of power generation sheets 21A (three power generation sheets 21A in FIG. 3) connected in parallel, as illustrated in FIG. 3. The number of the power generation sheets 21A of the solar cell 21 and the arrangement thereof are modifiable appropriately. Solar cells employable as the solar cell 21 include a microcrystal-silicon-based or amorphous-silicon-based solar cell, a heterojunction solar cell of crystalline silicon and microcrystal silicon or amorphous silicon, a compound-based solar cell made of CIGS (Copper Indium Gallium Selenide), CIS (Copper Indium Selenide), or CdTe (Cadmium Telluride), an organic-based solar cell such as an organic thin-film solar cell or a dye sensitization solar cell, a thin-film solar cell such as a quantum dot solar cell, and a solar cell obtained such that any of the solar cells is partially scribed by use of a laser or the like, and sunlight having a wavelength in a visible-light region is passed therethrough. It is preferable that the solar cell 21 be a transmissive power generation sheet 21A through which sunlight having a wavelength in a visible light region is passed and which generates electricity by sunlight having a wavelength in an ultraviolet range or an infrared region. Since the power generation sheet 21A generates electricity by sunlight having a wavelength in the infrared region, and an electrode layer has Low-E performance, the power generation glass module 2 also has heat insulating properties.

Each of the plurality of power generation sheets 21A includes a plurality of solar cell elements (not illustrated). In the case of a thin-film solar cell, the solar cell 21 is manufactured such that a transparent conductive coating (TCO) is disposed on the plate surface of the glass plate 10, and solar cell elements are deposited thereon and covered with a protective layer. As illustrated in FIG. 3, in the present embodiment, the solar cell 21 includes a connecting section 22 electrically connect the plurality of power generation sheets 21A, and electricity is transmitted from the connecting section 22 to the power transmission terminal 30. Hereby, the connecting section 22 allows electricity to be efficiently transmitted from the plurality of power generation sheets 21A to the power transmission unit 4 via the power transmission terminal 30. This consequently allows the power generation glass module 2 to increase power transmission efficiency from the solar cell module 20 with a simple configuration.

Although not illustrated herein, the solar cell module 20 may transmit electricity from each of the plurality of power generation sheets 21A to the power transmission terminal 30 without the connecting section 22. Since the solar cell 21 is constituted by the plurality of power generation sheets 21A, the solar cell 21 corresponding to the size or shape of the glass plate 10 can be easily formed by combining the plurality of power generation sheets 21A. For example, a sunlight transmissive region on the glass plate 10 can be adjusted appropriately by dispersedly disposing the plurality of power generation sheets 21A.

### (Power Transmission Terminal)

The power transmission terminal 30 is disposed near the power transmission unit 4 in the solar cell module 20. The lead wire 31 including a conducting wire is drawn to supply electricity from the solar cell module 20 to the power transmission unit 4 (described later). In the present embodiment, as illustrated in FIGS. 1, 2, the power transmission terminal 30 is placed on a lower end side of the solar cell 21, and the lead wire 31 is drawn from the power transmission terminal 30 (the lower edge portion 3B of the frame body 3). The frame body 3 may be configured to be partially openable and closable so that the power transmission unit 4 (described later) can be disposed therein, for example. Alternatively, the frame body 3 may have a recess on an outer surface of the frame body 3, and the power transmission unit 4 may be fixed to the outside of the recess. The power transmission terminal 30 is electrically connected to the power transmission unit 4 (described later) and moves together with the power transmission unit 4 in response to opening and closing of the glass plate 10. The power transmission terminal 30 is disposed such that the power reception unit 5 and the power transmission unit 4 face each other when the first glass plate 11 (the glass plate 11A, 11B) is fully closed, and in at least part of a range where the first glass plate 11 (the glass plate 1 1A, 11B) is openable. In the present embodiment, the power transmission terminal 30 is disposed such that the power reception unit 5 and the power transmission unit 4 face each other when the first glass plate 11 is fully closed, and in the whole range where the first glass plate 11 is openable.

When the power transmission terminal 30 is disposed as described above, the power generation glass module 2 can transmit electricity from the power transmission unit 4 to the power reception unit 5 disposed outside even in at least part of the range where the glass plate 10 is openable, in addition to the time where the glass plate 10 is fully closed. Hereby, the power generation glass module 2 can improve its operationability while the power generation glass module 2 secures the use of electricity generated by the solar cell 21 when the glass plate 10 is opened.

### (Power Transmission Unit)

The power transmission unit 4 is fixed inside the frame body 3 and is electrically connected to the power transmission terminal 30 via the lead wire 31. The power transmission unit 4 is configured to wirelessly transmit electricity to the power reception unit 5. The power transmission unit 4 receives electricity generated by the solar cell 21 from the power transmission terminal 30 and transmits the electricity to the power reception unit 5. The power transmission unit 4 includes an electronic circuit 41 including a conversion circuit or a setting circuit, and a power transmission coil 42, for example. The conversion circuit is an inverter configured to convert a direct current supplied from the solar cell 21 into an alternating current and supply the alternating current to the power transmission coil 42. The setting circuit sets the frequency of the alternating current based on transmission efficiency of the power transmission coil 42. As a power transmission method in the power transmission coil 42, an electromagnetic induction method, a resonance method, a radio wave method, or the like can be employed. Further, the power transmission coil 42 may transmit electricity to the power reception unit 5 by use of a direct current resonance method, and the conversion circuit can use a switching element instead of the inverter.

### (Power Reception Unit)

The power reception unit 5 is disposed inside the window frame 62, at a position facing the power transmission unit 4. The power reception unit 5 receives electricity wirelessly transmitted from the power transmission unit 4 of the power generation glass module 2. The power reception unit 5 is connected to a storage battery (not illustrated) and is configured to supply electricity to the storage battery, for example. Alternatively, the power reception unit 5 may be electrically connected to a home power source or a power transmission line.

The power reception unit 5 includes, for example, a power receiving coil, a rectifier circuit, a smoothing circuit, and a voltage stabilizer circuit (not illustrated). The power receiving coil is a power receiving antenna configured to receive electricity transmitted thereto and has a configuration in which the coil is wound. The power receiving coil receives electricity transmitted thereto by the same transmission method as the power transmission unit 4. The power receiving coil outputs a received alternating current to the rectifier circuit.

The power transmission terminal 30 and the power transmission unit 4 are disposed on one end side of the glass plate 11A, 11B in a direction perpendicular to the movable direction of the first glass plate 11. In the present embodiment, the movable direction of the first glass plate 11 is the direction X, and the direction perpendicular to the movable direction (the direction X) of the first glass plate 11 is the direction Z. The power transmission terminal 30 and the power transmission unit 4 are disposed on a lower end side of the glass plate 11A, 11B which lower end side is the Z2 side in the direction Z. When the glass plate 10 is fully closed, the power transmission terminal 30 and the power transmission unit 4 are disposed in an end of the lower edge portion 3B of the frame body 3 in the right-left direction (the direction X) and are close to a central side of the lower edge portion 62B of the window frame 62.

In order to increase power transmission efficiency from the power transmission unit 4 to the power reception unit 5, the frame body 3 may have an opening on a surface facing the power transmission unit 4. Note that, since the lower edge portion 3B of the frame body 3 has such a possibility that the power transmission terminal 30 and the power transmission unit 4 might get wet when condensation appears on the glass plate 10, the lower edge portion 3B has a waterproof mechanism at an appropriate position.

In the openable and closable glass plate 10, both end surfaces (the frame body 3) thereof in the direction (the direction Z) perpendicular to the movable direction (the direction X) are configured to move along opposed surfaces (the window frame 62) facing the end surfaces. In the present embodiment, the power transmission terminal 30 is disposed on at least one end side (the Z2-side) of the glass plate 10 in the direction (the direction Z) perpendicular to the movable direction (the direction X) of the glass plate 10. Hereby, even when the glass plate 10 moves, the power transmission terminal 30 can be disposed easily such that the power transmission unit 4 and the power reception unit 5 face each other.

The power reception unit 5 is disposed in the lower edge portion 62B of the window frame 62 to face the whole lower edge portion 3B of the frame body 3 which lower edge portion 3B is on the lower end side of the glass plate 11A, 11B that is fully closed. A width W1 of the power reception unit 5 in the movable direction (the direction X) of the first glass plate 11 is larger than a width W2 of the power transmission unit 4 in the movable direction (the direction X). Hereby, even when the glass plate 10 moves to a direction to be open from a state where the power reception unit 5 and the power transmission unit 4 face each other while the glass plate 10 is fully closed, it is possible to keep the power transmission unit 4 facing the power reception unit 5. As a result, in addition to the time when the glass plate 10 is fully closed, even when the glass plate 10 is opened, it is possible to surely transmit electricity from the power transmission unit 4 to the power reception unit 5 disposed outside.

Particularly, the power reception unit 5 in the present embodiment has the width W1 allowing the power reception unit 5 to face the power transmission unit 4 from the state where the first glass plate 11 is fully closed to the state where the first glass plate 11 is fully opened. This allows the power generation unit 1 to always transmit electricity generated by the solar cell 21 from the power transmission unit 4 to the power reception unit 5 regardless of the position of the glass plate 10. This makes it possible to increase efficiency in the use of electricity generated by the solar cell 21 in the power generation unit 1.

### [Modification 1 of First Embodiment]

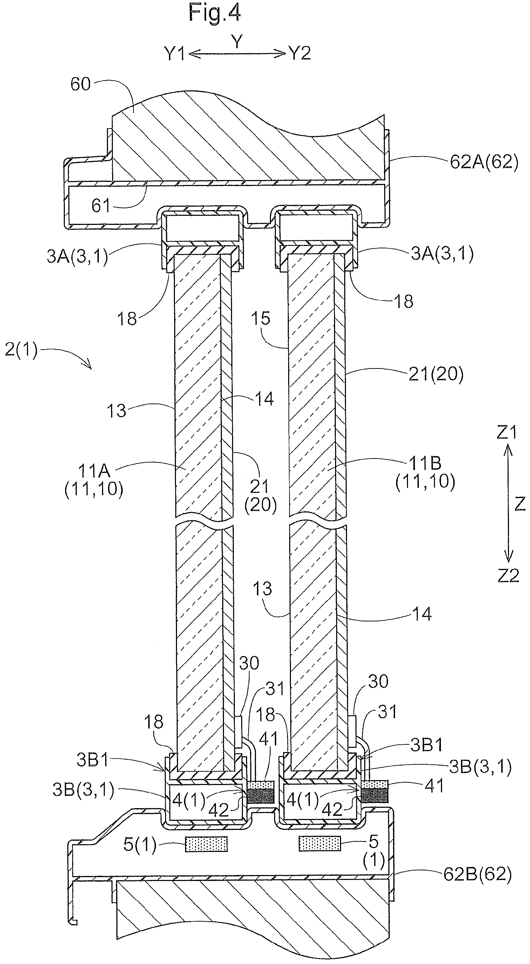

In Modification 1 of the first embodiment, as illustrated in FIG. 4, the frame body 3 and the window frame 62 are made of resin, and the power transmission unit 4 is disposed outside the frame body 3. More specifically, the power transmission unit 4 connected to the lead wire 31 of the power transmission terminal 30 is disposed on a lateral surface 3B1 of the lower edge portion 3B of the frame body 3. Hereby, the power transmission unit 4 can wirelessly transmit electricity to the power reception unit 5 only via the window frame 62 made of resin.

### [Second Embodiment]

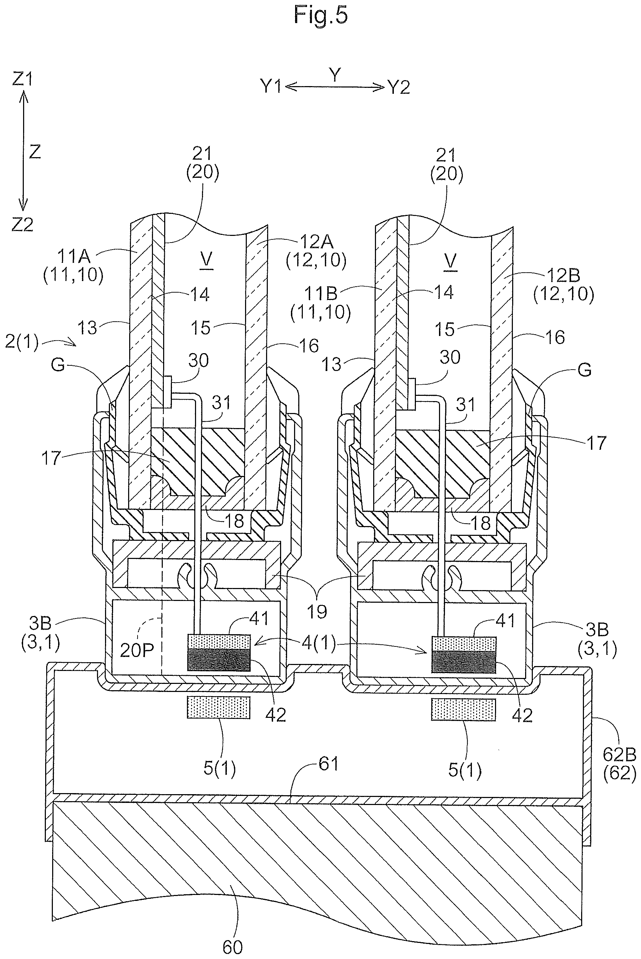

In the second embodiment, as illustrated in FIG. 5, the power generation glass module 2 is double glass including two glass plates having respective plate surfaces formed in generally the same rectangular external shape, that is, the first glass plate 11 and a second glass plate 12. The double glass includes a spacer 17 disposed between the first glass plate 11 and the second glass plate 12 and forming a gap layer V between the first glass plate 11 and the second glass plate 12. That is, the glass plate 10 is constituted by double glass, the spacer 17 is disposed between the two glass plates 11, 12 along their peripheral edges, and the sealing material 18 is provided outside the spacer 17 such that the space between the two glass plates 11, 12 is sealed. The glass plate 10 (the first glass plate 11 and the second glass plate 12) constituted by double glass includes one pair of glass plates 1 1A, 12A disposed on the outdoor side, and the other pair of glass plates 11B, 12B disposed on the indoor side. The first glass plate 11 has a first surface 13 as a plate surface facing the outdoor side and a second surface 14 as a plate surface facing the gap layer V side opposite from the first surface 13. The second glass plate 12 has a third surface 15 as a plate surface facing the gap layer V side, and a fourth surface 16 as a plate surface facing the indoor side opposite from the third surface 15. That is, the spacer 17 is in contact with the second surface 14 and the third surface 15. The solar cell module 20 is disposed on a principal surface (the second surface 14) facing the gap layer V in the first glass plate 11. Since the glass plate 10 is constituted by double glass, it is possible to improve heat insulation performance in the power generation glass module 2.

A glazing channel G constituted by a soft elastic member having a "U" shaped section is fitted to the outer peripheral edges of the first glass plate 11 and the second glass plate 12. A setting block 19 is provided under the glazing channel G. The frame body 3 is disposed to surround the glazing channel G and the setting block 19.

The solar cell module 20 is disposed on the second surface 14 of the first glass plate 11. That is, in the present embodiment, the principal surface on which the solar cell module 20 is provided in the glass plate 10 constituted by double glass is the second surface 14 of the first glass plate 11. When the solar cell module 20 is disposed on the second surface 14 of the first glass plate 11 as such, the solar cell module 20 is not exposed to the outdoor side and is protected by the first glass plate 11. This makes it possible to improve durability of the solar cell module 20. This also makes it possible to easily increase power generation efficiency of the solar cell 21.

In the present embodiment, similarly to the first embodiment illustrated in FIG. 2, the power transmission terminal 30 and the power transmission unit 4 are disposed on the lower end side of the glass plate 10 including a pair of glass plates, at a position close to the center of the window frame 62 when the glass plate 10 is fully closed. Further, the power reception unit 5 is disposed in the lower edge portion 62B of the window frame 62 to face the whole lower end of the glass plate 10 that is fully closed.

As illustrated in FIG. 5, the power transmission unit 4 is disposed closer to the indoor side than the solar cell module 20 in a thickness direction (the direction Y) of the glass plate 10. More specifically, the power transmission unit 4 is disposed on the Y2-side closer to the indoor side than a position 20P of the solar cell module 20 in the thickness direction (the direction Y) of the glass plate 10.

It is preferable that the power transmission unit 4 be disposed close to an end of the second surface 14 of the first glass plate 11 in order to shorten wiring. However, since the second surface 14 of the first glass plate 11 is at a position close to the outdoor side, the second surface 14 may receive wind and rain through a gap between the first glass plate 11 and the window frame 62 disposed around the first glass plate 11, which may damage the power transmission unit 4 under the influence of the wind and rain. In view of this, in the present embodiment, the power transmission unit 4 is disposed closer to the indoor side than the solar cell module 20 in a thickness direction (the direction Y) of the glass plate 10. This allows the power transmission unit 4 to be disposed at a position where the power transmission unit 4 can void the influence of outdoor wind and rain, thereby making it possible to improve durability of the power generation glass module 2.

### [Modification 1 of Second Embodiment]

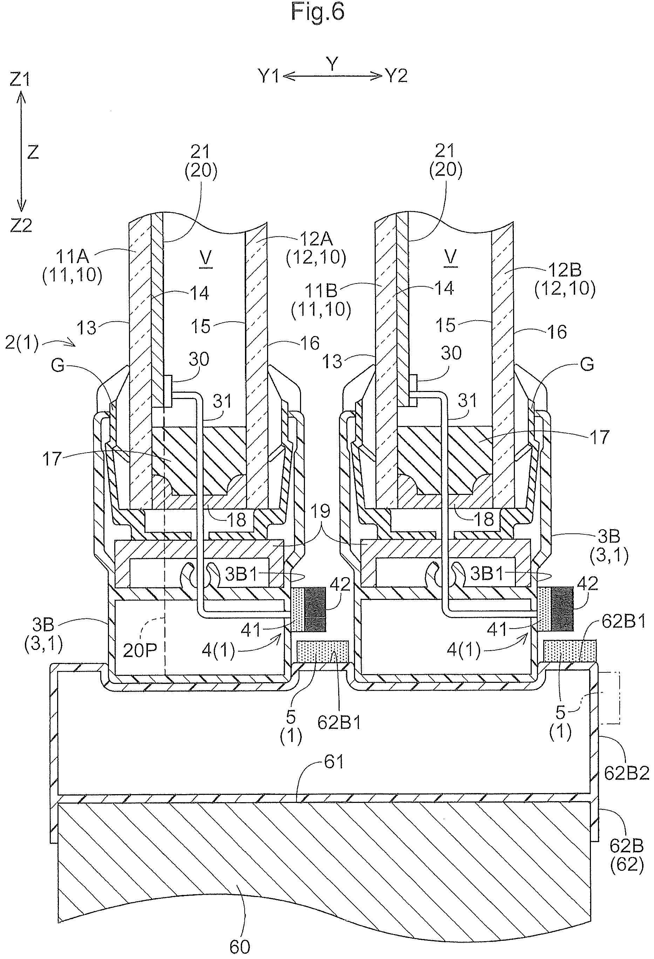

In Modification 1 of the second embodiment, as illustrated in FIG. 6, the frame body 3 and the window frame 63 are made of resin, the power transmission unit 4 is disposed outside the frame body 3, and the power reception unit 5 is disposed outside the window frame 62. More specifically, the lead wire 31 of the power transmission terminal 30 is passed through the lateral surface 3B1 of the frame body 3 (the lower edge portion 3B) from inside the frame body 3 (the lower edge portion 3B) to outside, and the power transmission unit 4 connected to the lead wire 31 is fixed to the lateral surface 3B1 of the frame body 3 (the lower edge portion 3B). The power reception unit 5 is disposed on an upper surface 62B1 of the window frame 62 (the lower edge portion 62B). Hereby, the power transmission unit 4 can wirelessly transmit electricity to the power reception unit 5 such that the electricity does not pass through the frame body 3 and the window frame 62. The power reception unit 5 that wirelessly receives electricity from the power transmission unit 4 disposed on the indoor side of the second glass plate 12 may be disposed on a lateral surface 62B2 of the window frame 62 (the lower edge portion 62B).

### [Modification 2 of First and Second Embodiments]

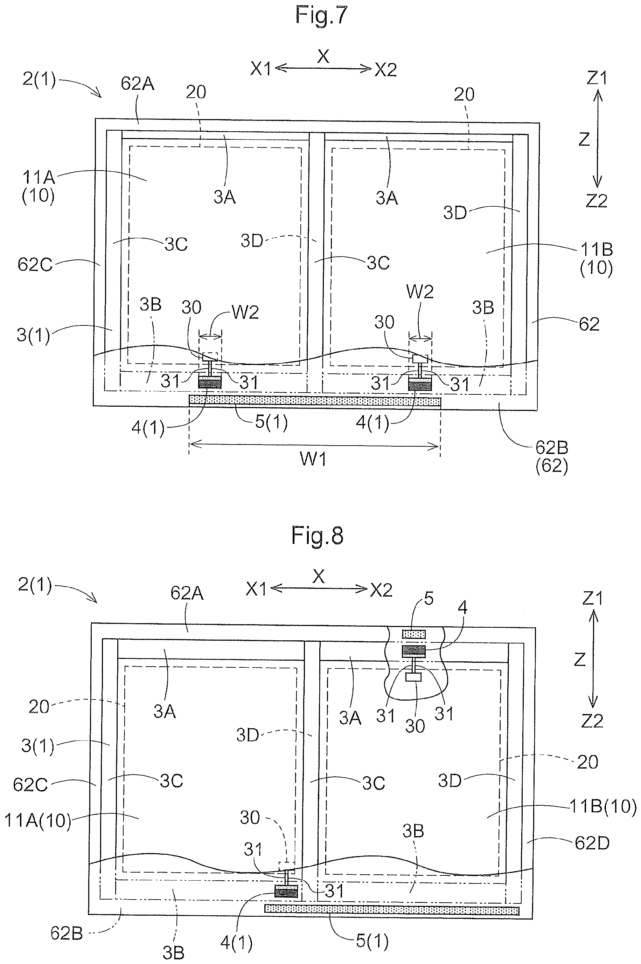

As illustrated in FIG. 7, the power transmission terminal 30 and the power transmission unit 4 may be disposed in the center of the first glass plate 11A, 11B in the right-left direction, and the power reception unit 5 may be disposed only in an intermediate region of the lower edge portion 62B of the window frame 62 which intermediate region faces a movable region of the power transmission unit 4.

In Modification 1, since the power reception unit 5 has the width W1 that allows the power reception unit 5 to face the power transmission unit 4 from the state where the glass plate 10 is fully closed to the state where the glass plate 10 is fully opened, the power generation unit 1 can always transmit electricity generated by the solar cell 21 from the power transmission unit 4 to the power reception unit 5 regardless of the position of the glass plate 10. This makes it possible to increase efficiency in the use of electricity generated by the solar cell 21 in the power generation unit 1. When the power transmission unit 4 is disposed at the central position of the glass plate 10 in the movable direction (the direction X), the width W1, in the movable direction of glass plate 10, of the power reception unit 5 disposed to face the power transmission unit 4 can be made small. This makes it possible to reduce an arrangement region for the power reception unit 5, thereby making it possible to configure the power generation unit 1 compactly.

### [Modification 3 of First and Second Embodiments]

In a case where the glass plate 10 (the first glass plate 11B) on the indoor side is fixed as illustrated in FIG. 8, the power transmission terminal 30 and the power transmission unit 4 may be disposed on the upper end side (the upper edge portion 3A of the frame body 3) of the glass plate 10 (the first glass plate 11B), and the power reception unit 5 having the same width as the power transmission unit 4 may be disposed in the upper edge portion 62A of the window frame 62, for example. In the meantime, the power transmission terminal 30 and the power transmission unit 4 are disposed on the lower side (the right end of the lower edge portion 3B of the frame body 3) of the first glass plate 11A on the outdoor side, and the power reception unit 5 is disposed in a right region of the lower edge portion 62B of the window frame 62 which right region faces the movable region of the power transmission unit 4.

### [Modification 4 of First and Second Embodiments]

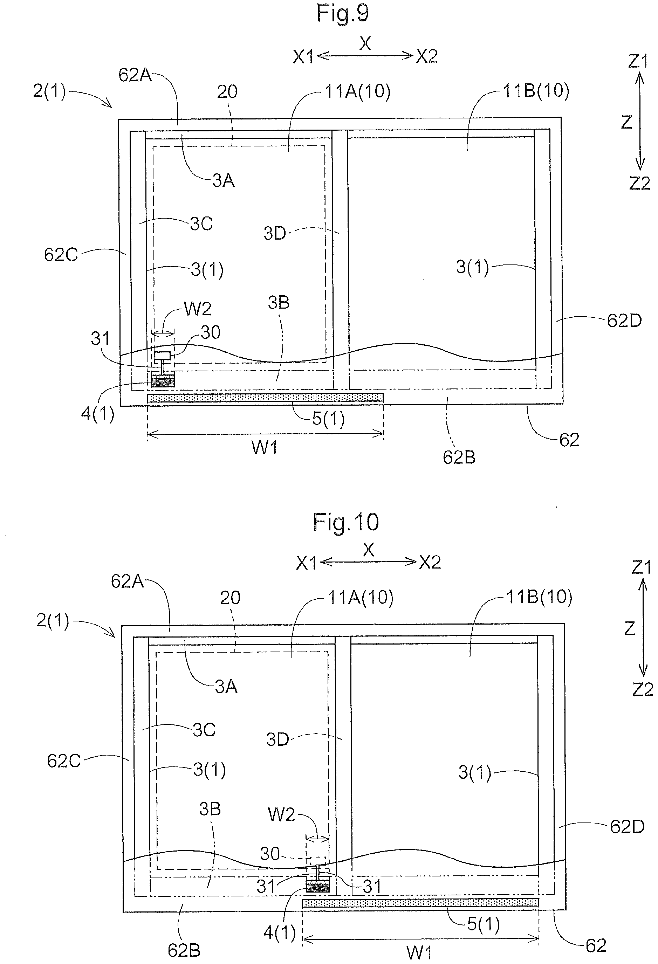

As illustrated in FIG. 9, the solar cell module 20 may be provided only in the first glass plate 11A on the outdoor side, out of the first glass plates 11A, 11B. In Modification 3, the power transmission terminal 30 and the power transmission unit 4 are disposed on the lower side (the left end of the lower edge portion 3B of the frame body 3) of the first glass plate 11A on the outdoor side, and the power reception unit 5 is disposed in a left region of the lower edge portion 62B of the window frame 62 which left region faces the movable region of the power transmission unit 4.

### [Modification 5 of First and Second Embodiments]

In Modification 4, similarly to Modification 3, the solar cell module 20 is provided only in the first glass plate 11A on the outdoor side, out of the first glass plates 11A, 11B as illustrated in FIG. 10. The power transmission terminal 30 and the power transmission unit 4 are disposed on the lower side (the right end of the lower edge portion 3B of the frame body 3) of the first glass plate 11A on the outdoor side, and the power reception unit 5 is disposed in a right region of the lower edge portion 62B of the window frame 62 which right region faces the movable region of the power transmission unit 4.

### [Modification 6 of Second Embodiment]

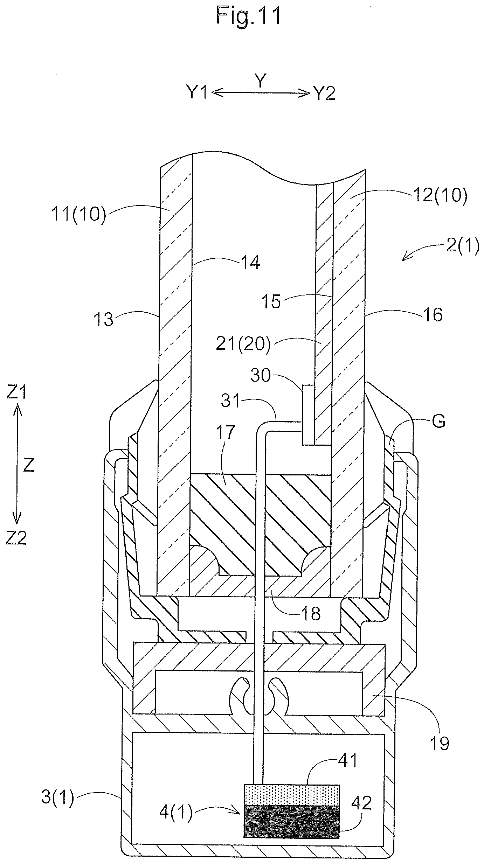

As illustrated in FIG. 11, in the power generation glass module 2 constituted by double glass, the solar cell module 20 may be disposed on the third surface 15 of the second glass plate 12 (12A, 12B).

### [Other Embodiments]

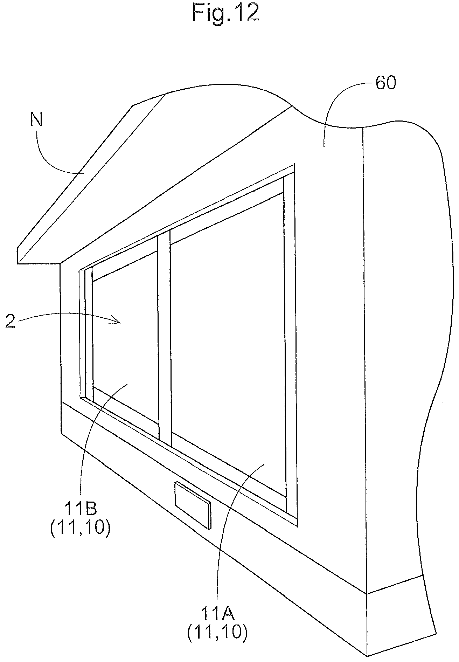

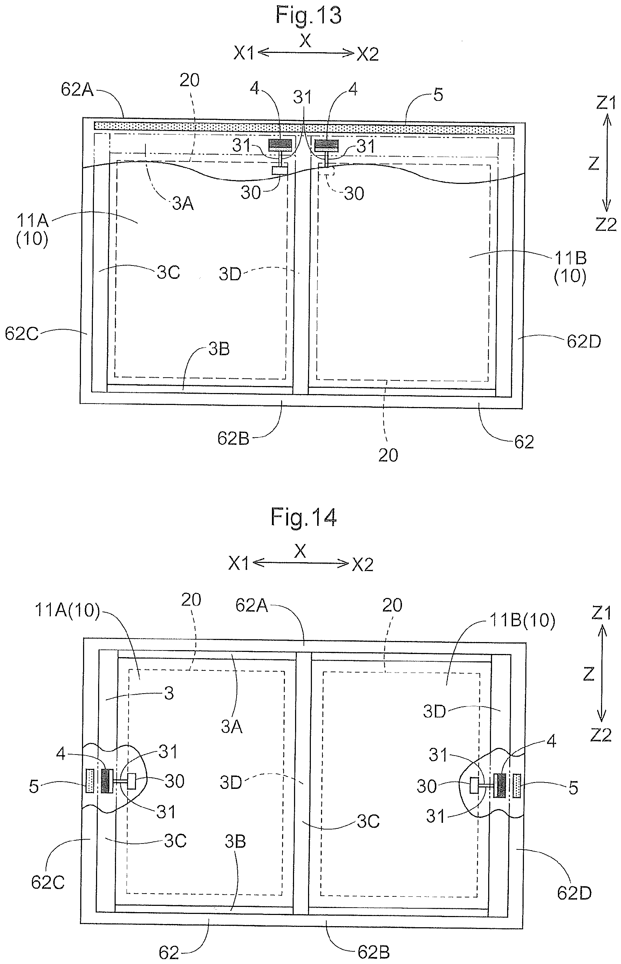

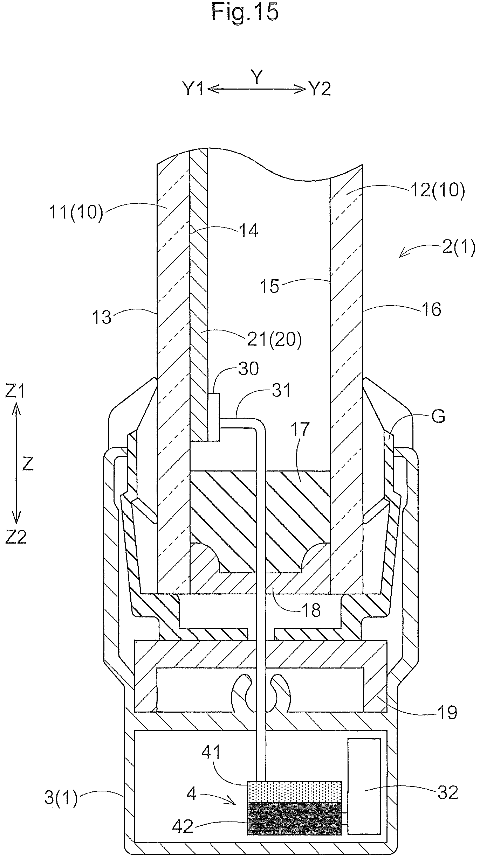

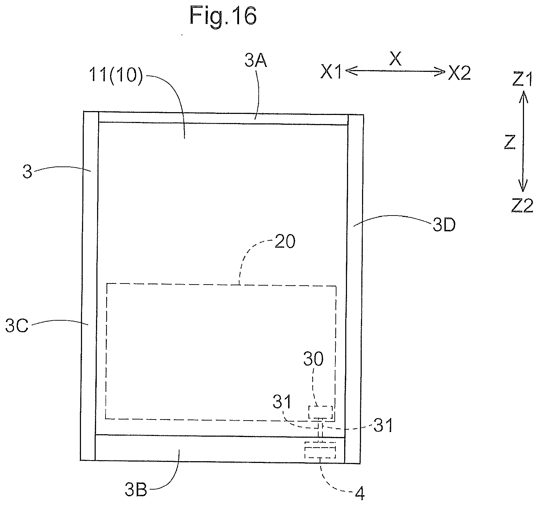

(1) As illustrated in FIG. 13, the power transmission terminal 30 may be disposed on the upper end side (the Z1-side in the direction Z) of the openable and closable glass plate 10, the power transmission unit 4 may be disposed in the upper edge portion 3A of the frame body 3, and the power reception unit 5 may be disposed in the upper edge portion 62A of the window frame 62. Hereby, the power transmission terminal 30 is disposed on the upper end side of the glass plate 10, and the solar cell module 20 is disposed below the power transmission terminal 30. In the building 60 like a general residence as illustrated in FIG. 12, for example, a window in which the power generation glass module 2 is placeable may be provided under eaves N. Generally, the eaves N block sunlight to be received by an upper portion of the window. On this account, in a case where the power generation glass module 2 is provided in the window under the eaves N, sunlight may not be incident on the solar cell 21 disposed in the upper portion of the glass plate 10. In the present embodiment, the solar cell module 20 can be separated from the upper end side (the Z1-side in the direction Z) of the glass plate 10 and disposed over the lower end side (the Z2-side in the direction Z). As a result, the power generation glass module 2 can effectively restrain a decrease in the power generation efficiency of the solar cell 21. When the power transmission terminal 30, the power transmission unit 4, and the power reception unit 5 are disposed on the upper end side (the Z1-side in the direction Z) of the glass plate 10 as illustrated in FIG. 13, it is possible to restrain electronic components from deteriorating due to accumulation of rain, dew drops, or the like on the lower end side (the Z2-side in the direction Z) of the glass plate 10. This makes it possible to extend the life of the power generation glass module 2 and the power generation unit 1.
(2) The above embodiment deals with an example in which the movable direction of the glass plate 10 is the right-left direction (the direction X), but the present invention is also applicable to a suspended-sash window in which the movable direction of the glass plate 10 is the up-down direction (the direction Z). In this case, the power transmission terminal 30, the power transmission unit 4, and the power reception unit 5 may be disposed at respective positions along the up-down direction (the direction Z) in which the glass plate 10 moves.
(3) As illustrated in FIG. 14, respective power transmission terminals 30 and respective power transmission units 4 may be disposed on both end sides of the glass plate 10 in the movable direction (the direction X) of the glass plate 10, and respective power reception units 5 may be disposed in the left edge portion 62C and the right edge portion 62D of the window frame 62. Since both end surfaces (the left edge portion 3C and the right edge portion 3D of the frame body 3) of the glass plate 10 on which the power transmission terminals 30 and the power transmission units 4 are disposed do not slide, the power transmission terminals 30 and the power transmission units 4 can be disposed easily. When the power reception units 5 are disposed to face the power transmission units 4 on both end sides of the glass plates 10 in the movable direction, the power transmission terminals 30 can transmit electricity from the power transmission units 4 to the power reception units 5 when the glass plate 10 is fully opened and fully closed. As a result, the power generation glass module 2 can use the electricity generated by the solar cell 21 when the glass plate 10 is fully closed and fully opened.
(4) As illustrated in FIG. 15, the power generation glass module 2 may include a power storage unit 32 configured to store electricity generated by the solar cell 21. The power storage unit 32 is provided at a position adjacent to the power transmission unit 4 inside the frame body 3, for example. The power storage unit 32 is configured to store electricity supplied to the power transmission unit 4 when the power transmission unit 4 is not at a position facing the power reception unit 5, for example. Hereby, when the position of the glass plate 10 is at a position where the power transmission unit 4 does not face the power reception unit 5 and no electricity cannot be transmitted from the power transmission unit 4 to the power reception unit 5, the power storage unit 32 can store electricity generated by the solar cell 21. The power storage unit 32 can also supply electricity to the power transmission unit 4 when the power transmission unit 4 is at the position facing the power reception unit 5, so that the electricity in the power storage unit 32 can be transmitted from the power transmission unit 4 to the power reception unit 5. This makes it possible to use surplus electric power generated by the solar cell 21 without wasting. Besides, even when the power generation efficiency of the solar cell 21 is low, electricity stored in the power storage unit 32 can be used, so that power generation and power storage can be completed in the power generation glass module 2, thereby achieving high utility.
(5) As illustrated in FIG. 16, in the power generation glass module 2, the solar cell module 20 may be disposed on the bottom half of the glass plate 10. In this case, the eaves N block sunlight to be received by the upper portion of the window as illustrated in FIG. 12, and therefore, when the solar cell module 20 is disposed on the bottom half of the glass plate 10, it is possible to effectively generate electricity. It is also possible to secure the field of view on the upper half of the glass plate 10.
(6) The above embodiment deals with an example in which the power generation glass module 2 is used for a sliding window, a single sliding window, or a suspended-sash window, but the power generation glass module 2 may be applied to a window in which the center glass plate 10 is fixed, and the glass plates 10 disposed on both sides of the center glass plate 10 are movable.

### Industrial Applicability

The present invention is widely usable for a power generation glass module and a power generation unit.

### Description of Reference Numerals

1: power generation unit
2: power generation glass module
3: frame body
4: power transmission unit
5: power reception unit
10: glass plate
11: first glass plate
12: second glass plate
14: second surface
15: third surface
20: solar cell module
21: solar cell
21A: power generation sheet
22: connecting section
30: power transmission terminal
31: lead wire
32: power storage unit
62: window frame
W1: width of power reception unit
W2: width of power transmission unit
X: width direction
Y: thickness direction
Z: up-down direction

## Claims

1. A power generation glass module movable and electrically connectable to a power transmission unit configured to wirelessly transmit electricity to a power reception unit disposed at a predetermined position outside the power generation glass module, the power generation glass module comprising:
a glass plate movable to be opened and closed and having a principal surface;
a solar cell module provided on the principal surface of the glass plate and including a solar cell configured to convert light into electricity; and
at least one power transmission terminal configured to supply the electricity from the solar cell module to the power transmission unit and move together with the power transmission unit in response to opening and closing of the glass plate,
the at least one power transmission terminal being drawn from an area of the solar cell module which area is close to the power transmission unit, such that the power reception unit faces the power transmission unit when the glass plate is fully closed, and in at least part of a range where the glass plate is openable.

2. A power generation glass module movable and electrically connectable to a power transmission unit configured to wirelessly transmit electricity to a power reception unit disposed at a predetermined position outside the power generation glass module, the power generation glass module comprising:
an openable and closable glass plate having a principal surface;
a solar cell module provided on the principal surface of the glass plate and including a solar cell configured to convert light into electricity; and
at least one power transmission terminal configured to supply the electricity from the solar cell module to the power transmission unit and move together with the power transmission unit in response to opening and closing of the glass plate,
the at least one power transmission terminal being drawn from an area of the solar cell module which area is close to the power transmission unit, such that the electricity is wirelessly transmittable from the power transmission unit to the power reception unit when the glass plate is fully closed, and in at least part of a range where the glass plate is openable.

3. The power generation glass module according to claim 1 or 2, wherein
the at least one power transmission terminal is disposed on one end portion of the glass plate in a direction perpendicular to a movable direction of the glass plate.

4. The power generation glass module according to claim 3, wherein
the movable direction of the glass plate is a right-left direction,
the at least one power transmission terminal is disposed on an upper end portion of the glass plate, and
the solar cell module is disposed below the at least one power transmission terminal.

5. The power generation glass module according to any one of claims 1 to 4, wherein
the at least one power transmission terminal includes power transmission terminals disposed on both end portions of the glass plate in a movable direction of the glass plate.

6. The power generation glass module according to any one of claims 1 to 5, further comprising
a power storage unit configured to store the electricity generated by the solar cell.

7. The power generation glass module according to any one of claims 1 to 6, wherein
the solar cell is constituted by a plurality of power generation sheets.

8. The power generation glass module according to claim 7, wherein
the solar cell module includes a connecting section configured to electrically connect the plurality of power generation sheets to each other, and
the solar cell module is configured to transmit the electricity from the connecting section to the at least one power transmission terminal.

9. The power generation glass module according to any one of claims 1 to 8, wherein
the glass plate is constituted by double glass including
a first glass plate,
a second glass plate disposed to face the first glass plate, and
a spacer disposed between the first glass plate and the second glass plate with a gap layer between the first glass plate and the second glass plate.

10. The power generation glass module according to claim 9, wherein
the first glass plate is disposed on an outdoor side,
the first glass plate has a first surface facing a side opposite from the gap layer and a second surface facing the gap layer,
the second glass plate has a third surface facing the gap layer, and a fourth surface facing a side opposite from the gap layer, and
the principal surface on which the solar cell module is provided is the second surface or the third surface.

11. The power generation glass module according to claim 10, wherein
the power transmission unit is electrically connected to the at least one power transmission terminal,
the principal plane is the second surface, and
the power transmission unit is disposed closer to an indoor side than the solar cell module in a thickness direction of the glass plate.

12. A power generation unit, comprising:
the power generation glass module according to any one of claims 1 to 11;
a frame body in support of the glass plate;
the power transmission unit fixed to the frame body; and
the power reception unit,
the power reception unit having a width in a movable direction of the glass plate which width is larger than a width of the power transmission unit in the movable direction.

13. The power generation unit according to claim 12, wherein
the power transmission unit is disposed at a central position of the glass plate in the movable direction, and
the power reception unit has a width allowing the power reception unit to face the power transmission unit from a state where the glass plate is fully closed to a state where the glass plate is fully opened.

14. The power generation unit according to claim 12 or 13, wherein
the frame body is made of resin.
